# EUROPEAN PATENT APPLICATION

(11) **EP 4 365 146 A1**
(43) Date of publication of application: **08.05.2024**
(21) Application number: 22383052.2
(22) Date of filing: 02.11.2022
(51) Int. Cl.: C04B 7/52

(54) **BLENDED CEMENTS, METHODS FOR THEIR MANUFACTURE, AND USE OF AN ADMIXTURE TO INCREASE PERFORMANCE OF BLENDED CEMENTS**

(71) Applicant: Sika Technology AG, 6340 Baar (CH)
(72) Inventor: ARENAS, Ana, 28033 Madrid (ES); FERNÁNDEZ, Jose Manuel, 28670 Villaviciosa de Odón (Madrid) (ES); VALVERDE, Cristina, 28108 Alcobendas (Madrid) (ES); GARCIA, Ramiro, 28108 Alcobendas (Madrid) (ES)
(74) Representative: Sika Patent Attorneys

(57) **Abstract**

The present invention relates to a method of manufacturing a blended cement, said method comprising a step of co-grinding Portland clinker and cementitious waste material in the presence of a grinding aid selected from alkanolamines, glycols, glycerol, carbohydrates, chlorides, or mixtures thereof. The present invention also relates to blended cements obtainable in such method. Finally, the present invention relates to the use of an admixture selected from alkanolamines, glycols, and/or glycerol to increase the performance after hardening of a blended cement comprising Portland clinker and a supplementary cementitious material retrieved from cementitious waste material.

## Description

### Technical Field

The present invention relates to the field of blended cements. More specifically, the present invention relates to methods for the production of blended cements and to grinding aids useful in such methods. The present invention also relates to the field of recycling of cementitious waste materials, especially of waste concrete and mortar from demolition of buildings.

### Background of the invention

For many years the construction industry has used and continues to use cements and especially Ordinary Portland Cement (OPC). However, especially the use of OPC has a high environmental footprint. One major reason are the high CO₂ emissions associated with the manufacture of cements. Many efforts have thus been made to replace OPC at least partially as binders from construction materials.

One possibility is the use of so called supplementary cementitious materials (SCM), to at least partially replace OPC. Cements comprising OPC and SCM are also called blended cements or composite cements. SCM that are known for many years include steelmaking slag, calcined clays, natural pozzolans such as volcanic ashes, silica fume, or fly ash.

For example, WO 2018/228839 discloses composite cements obtainable by grinding Portland clinker and a latent hydraulic material together, optionally in the presence of an alkanolamine grinding aid, and combining the ground material with a mineral filler.

It is also known that hardened concrete, for example in the form of demolition waste, can be treated to retrieve aggregates and a mineral powder suitable as SCM. A suitable process is for example disclosed in WO 2021/170501 (Sika Technology AG).

The retrieval of SCM from demolition waste and its use to replace Portland cement is an important step towards a circular economy in the field of construction materials.

An important step in the treatment of waste construction material for the retrieval of mineral powder useful as SCM is the grinding step. What is especially desired are methods and chemicals that can improve the grinding efficiency and at the same time yield SCM with improved properties. Especially desirable, such methods and chemicals can be used in the co-grinding of Portland clinker and cementitious waste materials, especially waste construction materials.

### Summary of the invention

The present invention resolves one or more of the following objectives:
(i) Provide methods for the manufacture of blended cements, said blended cements having a content of Portland cement and a content of SCM derived from cementitious waste material.
(ii) Provide blended cements having a content of Portland cement and a content of SCM derived from cementitious waste material.
(iii) Provide ways to improve the performance of blended cements having a content of Portland cement and a content of SCM derived from cementitious waste material. Especially, to improve the compressive strength and/or the shrinkage behavior of such blended cements and of construction materials comprising such blended cements.
(iv) Provide ways to improve the grinding efficiency of cementitious waste material.

It has surprisingly been found that some objectives can be solved by a method as claimed in claim 1.

It has likewise surprisingly been found that some objectives can be solved by the targeted use of suitable grinding aids selected from alkanolamines, glycols, glycerol, carbohydrates, chlorides, or mixtures thereof.

Thus, surprisingly, advantageous blended cements comprising Portland cement and SCM derived from cementitious waste material can be obtained in a method comprising a step of co-grinding Portland clinker and cementitious waste material in the presence of grinding aids selected from alkanolamines, glycols, glycerol, carbohydrates, chlorides, or mixtures thereof.

Advantages of the present invention include a better activation of SCM derived from cementitious waste material, especially construction demolition waste, a higher performance of blended cements comprising Portland cement and SCM derived from cementitious waste material, a reduction of waste due to the use of cementitious waste material, an improvement of grinding efficiency of blended cement and of cementitious waste material.

Further aspects of the present invention are the subject of independent claims. Preferred embodiments are the subject of dependent claims.

### Ways for carrying out the invention

In a first aspect the present invention relates to a method of manufacturing a blended cement, said method comprising the steps of
(1) providing a Portland clinker,
(2) providing a cementitious waste material,
(3) providing a grinding aid selected from alkanolamines, glycols, glycerol, carbohydrates, chlorides, or mixtures thereof, and
(4) co-grinding the Portland clinker and cementitious waste material in the presence of said grinding aid.

Within the present context the terms "blended cement" and "composite cement" are used interchangeably. Both terms relate to cements comprising mixtures of at least one hydraulic material with at least one further material, said further material may be another hydraulic material, a pozzolane, a latent hydraulic material, a non-hydraulic material, or a filler.

Hydraulic materials or hydraulic binders are materials that react with water in a hydraulic reaction to form solid hydrate phases. Hydraulic materials especially are cements, preferably Portland cement. Pozzolanes and latent hydraulic materials in particular are type II concrete additives with latent hydraulic and/or pozzolanic character according to standard EN 206-1. Typical pozzolanes are volcanic ashes, pumice, burnt oil shale, clay, calcined clay, rice husk ash, microsilica, silica fume, and fly ash. Typical latent-hydraulic materials are slags, especially ground granulated blast furnace slag and basic oxygen furnace slag.

Portland clinker within the present context is a sinter product obtained in a cement kiln from limestone and aluminosilicate materials at elevated temperatures. The term "clinker" refers to the unground material and typically occurs as lumps or nodules. Portland clinker used in the present context can be any type of Portland clinker. A typical phase composition of Portland clinker is 45 - 80 w% C₃S, 1 - 40 w% C₂S, 0 - 15 w% C₃A, and 0 - 20 w% C₄AF (where "C" stands for CaO, "S" for SiO₂, "A" for Al₂O₃, "F for Fe₂O₃). A typical chemical composition of Portland clinker is 55 - 75 w% CaO, 15 - 25 w% SiO₂, 2 - 6 w% Al₂O₃, 0 - 6 w% Fe₂O₃, 0 - 2 w% MgO, and 0 - 2 w% SO₃.

The term "cement" within the present context refers to a ground material. Thus, for example, a Portland cement is a cement obtained from grinding Portland clinker. The Blaine fineness of Portland cement can be in the range of 2500 cm²/g to 12000 cm²/g, preferably 3000 cm²/g to 9000 cm²/g, especially 3500 cm²/g to 8000 cm²/g. The Blaine fineness can be measured according to DIN EN 196-6:2018.

Within the present context the term "cementitious waste material" refers to any cementitious material that cannot be used for its intended purpose or that has reached its end of life. A cementitious material in this context is a material comprising at least one hydraulic binder, especially at least one cement. The hydraulic binder can be in an unhardened state or can be partially or fully hardened. According to certain embodiments, the cementitious waste material contains at least 5 w%, preferably at least 10 w%, more preferably at least 20 w% of at least one hydraulic binder, especially cement, in an unhardened, partially hardened or fully hardened state. Especially, the cementitious waste material is waste construction material. Waste construction material for example is surplus material, off-spec material, returned material or demolition waste. Especially, the cementitious waste material is demolition waste. According to embodiments, the cementitious waste material comprises aggregates and at least one hydraulic binder but is otherwise not limited in its composition. A particularly preferred cementitious waste material is concrete, especially surplus concrete, off-spec concrete, or concrete from demolition.

It is possible that the cementitious waste material is a mix of different materials. For example, the cementitious waste material can be concrete or mortar, mixtures of concrete and gypsum-based materials, mixtures of concrete and plaster, mixtures of brick and mortar, mixtures of brick, mortar, and plaster, etc. Metal fibers, especially steel fibers, polymer fibers, and/or glass may also be contained in cementitious waste material. Especially, the cementitious waste material comprises cement, unhardened, partially hardened, or fully hardened, aggregates, and fillers. It is, however, preferred, that the cementitious waste material does not contain large pieces of metals or wood.

The cementitious waste material can be pre-treated before being put to a method of the present invention. Pre-treatment is especially the crushing of cementitious waste material and/or the sorting according to materials. Where crushing is performed, it is preferred that the size of crushed material is bigger than the particle size of the biggest aggregate. Another pre-treatment can be the sorting of cementitious waste material to separate cementitious materials from metal, wood, plastic, papers, and/or plaster. The sorting can, for example, be done with magnets or by density separation.

It can be advantageous that the cementitious waste material comprises some ceramic material. For example, the cementitious waste material may comprise up to 25 w% of ceramic materials, preferably between 1 - 5 w% of ceramic materials.

A ground cementitious waste material typically contains aggregates and a supplementary cementitious material. The supplementary cementitious material especially is the hydraulic, pozzolanic, and/or latent hydraulic material used to make the original cementitious material, and which may be hardened or unhardened, preferably hardened.

The grinding aid of the present invention is selected from alkanolamines, glycols, glycerol, carbohydrates, chlorides, or mixtures thereof. It is possible, that a grinding aid of the present invention is formulated as a solution or dispersion in a liquid, especially in water. Thus, a grinding aid of the present invention may take the form of a solution or dispersion of alkanolamines, glycols, glycerol, carbohydrates, chlorides, or mixtures thereof, in a liquid, especially in water. In the following all dosage ranges for the grinding aid refer to the alkanolamines, glycols, glycerol, carbohydrates, chlorides, or mixtures thereof, present, without any liquid, especially water.

Alkanolamines are preferably selected from the group consisting of monoethanolamine, diethanolamine, triethanolamine (TEA), diethanolisopropanolamine (DEIPA), ethanoldiisopropanolamine (EDIPA), isopropanolamine, diisopropanolamine, triisopropanolamine (TIPA), N-methyldiisopropanolamine (MDIPA), N-methyldiethanolamine (MDEA), tetrahydroxyethylethylenediamine (THEED), and tetrahydroxyiso-propylethylenediamine (THIPD), as well as mixtures of two or more of these alkanolamines. According to particularly preferred embodiments, the alkanolamine is selected from TEA, TIPA, DEIPA, MDEA, or mixtures thereof.

According to embodiments, glycols are selected from the group consisting of ethylene glycol, diethylene glycol, propylene glycol, dipropylene glycol, butyl diglycol, neopentyl glycol, hexylene glycol. Preferably, the glycol is diethylene glycol.

Carbohydrates of the present invention belong to the group of monosaccharides or disaccharides. Examples of suitable carbohydrates include, but are not limited to, glyceraldehyde, threose, erythrose, xylose, lyxose, ribose, arabinose, allose, altrose, glucose, mannose, gulose, idose, galactose, tallose, fructose, sorbose, lactose, maltose, sucrose, lactulose, trehalose, cellobiose, chitobiose, isomaltose, palatinose, mannobiose, raffinose and xylobiose. Carbohydrates can also be used in form of e.g. vinasse, molasse.

Chlorides within the present context preferably are chlorides of alkali metals or alkaline earth metals. Especially, chlorides are sodium chloride or calcium chloride.

A particularly preferred grinding aid is a mixture of diethylene glycol and glycerol. Another particularly preferred grinding aid is a mixture of triisopropanolamine (TIPA) and diethanolisopropanolamine (DEIPA). Another particularly preferred grinding aid is a mixture of alkanolamine, especially triisopropanolamine (TIPA) or diethanolisopropanolamine (DEIPA), a carbohydrate, and a chloride, especially sodium chloride or calcium chloride.

Co-grinding in a method of the present invention can be practiced on attrition mills. Especially suitable attrition mills are semi-autogenous mills and compressive grinders. A compressive grinder within the present context is a type of grinder able to exert a compressive force on a bed of material to be ground. Preferably, the compressive force is exerted by rotating cylinders or a rotor-stator. A compressive grinder can for example be a crusher or a roller mill. According to preferred embodiments, the compressive grinder is a vertical roller mill, or a horizontal roller mill. Examples for a semi-autogenous mill is a ball mill or an agitation mill. According to embodiments, in a method of the present invention, the grinding is done in a ball mill or in an agitation mill.

Grinding can be done batch-wise or continuously. Thus, a method of the present invention can be a batch process or a continuous process.

The term "co-grinding" means that Portland clinker and cementitious waste material are ground in the presence of the grinding aid. The terms "grinding" and "milling" may be used interchangeably within the present context.

The co-grinding of the present invention preferably is a dry process. This means that the amount of water present during grinding is less than 10 w%, preferably less than 5 w%, especially less than 2 w%, relative to the total weight of the solid materials to be ground.

It is preferred that the grinding aid is sprayed over the Portland clinker and the cementitious waste material inside the mill. It is likewise possible to add the grinding aid to the Portland clinker and/or the cementitious waste material on a conveyor belt that feeds the mill. This is especially preferable where the method of the present invention is a continuous process.

It is possible that in a method of the present invention further materials, different from Portland clinker and cementitious waste material, are present during the step of co-grinding. Such further materials preferably are selected from gypsum, pozzolanes, and/or latent hydraulic materials. Pozzolanes and latent hydraulic materials are as defined above. According to embodiments, in a method of the present invention additionally gypsum, a pozzolane, and/or a latent hydraulic material is present during grinding, wherein the pozzolane and/or the latent hydraulic material is different from the cementitious waste material.

It is preferable that the Portland clinker and the cementitious waste material are present in the step of co-grinding in certain defined weight ratios.

According to embodiments, in a method of the present invention, a weight ratio of Portland clinker to cementitious waste material is between 1:1 and 10:1, preferably between 2:1 and 6:1, especially around 3:1 or 5:1.

If the weight ratios fall outside these ranges, properties of the blended cement obtained, when mixed with water and/or after hardening, especially workability, shrinkage, and/or compressive strength, are not optimal. For example, if the ratio of cementitious waste material is too big, the compressive strength of a blended cement obtained after hardening may be lowered.

According to embodiments, in a method of the present invention, the grinding aid is present in an amount of 40 - 2500 ppm, preferably 100 - 1500 ppm, especially 800 - 1200 ppm, relative to the total dry weight of the combined Portland clinker, cementitious waste material, and, if present, gypsum, pozzolane, and latent hydraulic material. The term "ppm" throughout the present context means "parts per million".

It is possible that a method of the present invention additionally comprises a step of size separation of particles.

According to embodiments, separation is effected at a predefined cut-off particle size in order to separate cleaned aggregates originating from the cementitious waste material, from the blended cement produced. Aggregates have a particle size of equal to or higher than the predefined cut-off particle size. According to embodiments, separation is done by filtration, sieving, sedimentation, density separation, wind sifting, e.g. in cyclones, and/or centrifugation.

Such size separation leads to the retrieval of aggregates and of a supplementary cementitious material (SCM) which SCM then forms part of the blended cement.

It is, however, also possible that the SCM obtained from grinding the cementitious waste materials contains aggregates.

It is possible for a blended cement of the present invention to contain further materials. Especially such further materials may be further SCM and/or fillers. Suitable further materials especially are gypsum, pozzolanes, latent hydraulic materials, and/or fine limestone powder. It possible to already add further materials, especially gypsum, pozzolanes, and/or latent hydraulic materials, before or during the co-grinding step of a method of the present invention. This may especially be useful where the hardness and grindability of the further materials is similar to Portland clinker and cementitious waste material. It is however also possible to add further materials, especially limestone, after the co-grinding step, in a separate step of mixing of dry powders. This may especially be useful where the hardness and grindability of further materials is different from Portland clinker and cementitious waste material.

Thus, according to embodiments, in a method of the present invention the ground mixture is combined with one or more mineral fillers, preferably with limestone.

It is preferred that in a method of the present invention there is no carbonation in the step of co-grinding Portland clinker and cementitious waste material. This means, that Portland clinker and cementitious waste material are not reacted with CO₂ during the co-grinding step.

In another aspect the present invention relates to a blended cement obtainable in a method as described above.

Any features described as preferred above also apply to this aspect.

Preferably, the blended cement is present in the form of a dry powder. The Blaine fineness of the blended cement can be in the range of 2500 cm²/g to 12000 cm²/g, preferably 3000 cm²/g to 9000 cm²/g, especially 3500 cm²/g to 8000 cm²/g. The Blaine fineness can be measured according to DIN EN 196-6:2018.

According to embodiments, a blended cement of the present invention comprises or consists of (relative to the total dry weight of the blended cement unless stated otherwise)
a) 60 - 90 w%, preferably 70 - 80 w%, of Portland clinker,
b) 5 - 35 w%, preferably 15 - 25 w% of cementitious waste material,
c) optionally 1 - 10 w%, preferably 5 w%, of gypsum, and
d) 40 - 2500 ppm, preferably 100 - 1500 ppm, especially 800 - 1200 ppm, relative to the total dry weight of the combined Portland clinker, cementitious waste material, and gypsum if present, of a grinding aid selected from alkanolamines, glycols, glycerol, carbohydrates, chlorides, or mixtures thereof.

In another aspect the present invention relates to a construction material, especially a concrete or mortar, comprising the blended cement as described above.

Any features described as preferred above also apply to this aspect.

The construction material is not particularly limited in its composition as long as it comprises a blended cement of the present invention.

For example, a construction material of the present invention may additionally comprise aggregate such as for example rock, crushed stone, gravel, sand, especially quartz sand, river sand and/or manufactured sand, glass, expanded glass, hollow glass beads, glass ceramics, bio-sourced materials such as hemp fibers or cork, and synthetic organic materials such as rubber.

A construction material of the present invention may also comprise any further additives common to the mortar and concrete industry. Especially such further additives are selected from plasticizers, superplasticizers, shrinkage reducers, air entrainers, deaerating agents, stabilizers, viscosity modifiers, thickeners, water reducers, retarders, water resisting agents, fibers, blowing agents, defoamers, redispersible polymer powders, dedusting agents, chromate reducers, pigments, biocides, corrosion inhibitors, and steel passivating agents. The further additives are chemically different from the grinding aids as described above.

According to preferred embodiments, the construction material of the present invention is a concrete or a mortar.

The construction material of the present invention may be in a dry form or in a wet form. Dry form here means that the construction material is in the form of a free flowing powder and has a water content of not more than 10 w%, preferably not more than 5 w%, especially not more than 1 w%. Wet form here means that the construction material is mixed with water. According to embodiments, the mix ratio by weight of water to blended cement is between 0.1 - 1.0, preferably 0.2 - 0.6.

In another aspect the present invention relates to the use of an admixture selected from alkanolamines, glycols, glycerol, carbohydrates, chlorides, or mixtures thereof to reduce the shrinkage of a blended cement, or of a construction material comprising a blended cement, during hardening, said blended cement comprising Portland cement and a supplementary cementitious material retrieved from cementitious waste material.

Any features described as preferred above also apply to this aspect.

Especially, the blended cement is a cement obtained in a method as described above. It is however also possible that a blended cement in this aspect is obtained by mixing Portland cement and ground cementitious waste material. Methods to obtain Portland cement are known to the skilled person. The ground cementitious waste material in this context preferably is obtained in a method as described above and where no Portland clinker is present.

According to preferred embodiments, the admixture selected from alkanolamines, glycols, glycerol, carbohydrates, chlorides, or mixtures thereof is added to the Portland clinker and/or to the cementitious waste material before or during the grinding thereof.

It is, however, also possible to add the admixture selected from alkanolamines, glycols, glycerol, carbohydrates, chlorides, or mixtures thereof after the grinding to Portland cement, an SCM retrieved from cementitious waste material, or to a mixture thereof.

Thus, according to preferred embodiments, Portland clinker and/or cementitious waste material are ground or co-ground in the presence of the admixture.

The admixture may comprise other materials besides alkanolamines, glycols, glycerol, carbohydrates, chlorides, or mixtures thereof. For example, the admixture may take the form of a solution or dispersion of alkanolamines, glycols, glycerol, carbohydrates, chlorides, or mixtures thereof in a liquid, especially in water.

Especially, the construction material is as described above.

Hardening of a blended cement or of a construction material of the present invention starts when water is added.

Within the present context, shrinkage relates to the dimensional stability and can be measured according to standard EN 12617-4.

A reduced shrinkage is desirable because this leads to less cracking and thus to a longer service life of any object obtained by hardening a blended cement or a construction material of the present invention.

In another aspect the present invention relates to the use of an admixture selected from alkanolamines, glycols, glycerol, carbohydrates, chlorides, or mixtures thereof to increase the compressive strength of a blended cement, or of a construction material comprising a blended cement, after hardening, said blended cement comprising Portland cement and a supplementary cementitious material retrieved from cementitious waste material.

Any features described as preferred above also apply to this aspect.

Especially, the blended cement is a cement obtained in a method as described above. It is however also possible that a blended cement in this aspect is obtained by mixing Portland cement and ground cementitious waste material. Methods to obtain Portland cement are known to the skilled person. The ground cementitious waste material in this context preferably is obtained in a method as described above and where no Portland clinker is present.

According to preferred embodiments, the admixture selected from alkanolamines, glycols, glycerol, carbohydrates, chlorides, or mixtures thereof is added to the Portland clinker and/or to the cementitious waste material before or during the grinding thereof.

It is, however, also possible to add the admixture selected from alkanolamines, glycols, glycerol, carbohydrates, chlorides, or mixtures thereof after the grinding to Portland cement, an SCM retrieved from cementitious waste material, or to a mixture thereof.

Thus, according to preferred embodiments, Portland clinker and/or cementitious waste material are ground or co-ground in the presence of the admixture.

The admixture may comprise other materials besides alkanolamines, glycols, glycerol, carbohydrates, chlorides, or mixtures thereof. For example, the admixture may take the form of a solution or dispersion of alkanolamines, glycols, glycerol, carbohydrates, chlorides, or mixtures thereof in a liquid, especially in water.

Especially, the construction material is as described above.

Hardening of a blended cement or of a construction material of the present invention starts when water is added.

Compressive strength can be measured according to standard EN 12190 on 4x4x16cm prisms.

An increased compressive strength is desirable because this leads to increased load bearing capacity of any object obtained by hardening a blended cement or a construction material of the present invention. Where a higher load bearing capacity of an object is achieved, the engineering design of this object may be adjusted to use less hydraulic binder in the construction material and/or reduce the thickness of the object.

In another aspect the present invention relates to the use of a grinding aid selected from alkanolamines, glycols, glycerol, carbohydrates, chlorides, or mixtures thereof, to improve the efficiency of the grinding of cementitious waste material, wherein the grinding is done without carbonation of the cementitious waste material.

Any features described as preferred above also apply to this aspect.

Preferred grinding aids within this aspect are selected from TEA, TIPA, DEIPA, MDEA, ethylene glycol, diethylene glycol, propylene glycol, dipropylene glycol, butyl diglycol, neopentyl glycol, hexylene glycol, glycerol, a carbohydrate, sodium chloride, calcium chloride, or mixtures thereof. It is possible that the admixture takes the form of a solution or dispersion of alkanolamines, glycol, glycerol, carbohydrates, chlorides, or mixtures thereof in a liquid, especially in water.

According to embodiments, within this aspect, the grinding aid is used in an amount of 100 - 1500 ppm, preferably 250 - 1200 ppm, especially 400 ppm or 1000 ppm, relative to the dry weight of the cementitious waste material.

A higher grinding efficiency can be an increase of fineness of the ground material within the same grinding time. A higher grinding efficiency can also be a reduction of grinding time to achieve the same fineness of the ground material. A higher grinding efficiency can also be less energy consumption of the mill to achieve the same fineness of the ground material. The latter can be due, for example, to a more stable grinding bed or less vibrations of the mill.

In this aspect, during the grinding of the cementitious waste material, there is no carbonation. This means, that Portland clinker and cementitious waste material are not reacted with CO₂ during the co-grinding step.

It is possible, in this aspect, that the cementitious waste material is co-ground with other hydraulic materials, pozzolanes, and/or latent hydraulic materials.

Preferably, there is a size separation of particles during or after the grinding of the cementitious waste material. According to embodiments, separation is effected at a predefined cut-off particle size in order to separate cleaned aggregates originating from the cementitious waste material, from the blended cement produced. Aggregates have a particle size of equal to or higher than the predefined cut-off particle size. By this procedure, aggregates are separated from the supplementary cementitious material. According to embodiments, separation is done by filtration, sieving, sedimentation, density separation, wind sifting, e.g. in cyclones, and/or centrifugation.

The following examples will provide the skilled person with further embodiments of the present invention.

### Examples

### Example 1

The cementitious waste material used was a pre-crushed concrete from demolition (with primary aggregate sand and gravel 0-32 mm). A jaw crusher was used to pre-crush the cementitious waste material. The pre-crushed material was then sieved and the 2- 4 mm fraction was used in Example 1 (referred to as RCD-1 in the following). RCD-1 was dried at 105°C prior to milling.

A laboratory ball mill with steel balls was used. For the grinding, 300 g of RCD-1 were introduced into the ball mill together with 260 g of steel balls (diameter 45 - 49 mm). Vessel and balls were pre-heated to 105°C. The type and amount of grinding aid as indicated in below table 1 was added to the mill. Milling was then done for 15 minutes.

The milled RCD-1 was tested for particle size by sieving according to standard EN 196-6:2010. The following table 1 shows the results.

**Table 1: examples 1-1 to 1-10 (example 1-1 is not inventive)**

| **Example** | **1-1** | **1-2** | **1-3** | **1-4** | **1-5** | **1-6** | **1-7** | **1-8** | **1-9** | **1-10** |
|---|---|---|---|---|---|---|---|---|---|---|
| Grinding aid* | none | D | D | D | G | G | G | D+G | D+G | D+G |
| Dosage [ppm] | | 250 | 500 | 1000 | 250 | 500 | 1000 | 100 | 200 | 400 |
| R 32µm [%]** | 47 | 29 | 25 | 23 | 27 | 26 | 23 | 29 | 25 | 24 |
| R 45µm [%]** | 21 | 17 | 14 | 12 | 16 | 15 | 10 | 18 | 16 | 14 |
| D90 [µm]*** | 75.4 | 64.1 | 56.2 | 55.2 | 63.6 | 59.1 | 54 | 72.8 | 70.9 | 63.9 |

| | | | | | | | | | | |
|---|---|---|---|---|---|---|---|---|---|---|
| *D: diethylene glycol, G: glycerol, D+G: 1:3 mixture of diethylene glycol and glycerol ** w% retained on sieve *** particle size where 90 w% of all particles are smaller | | | | | | | | | | |

It can be seen from table 1 that the addition of grinding aid led to a decrease in particle size D90 as well as to lower retention on the 32 µm and 45 µm sieve. Thus, finer particles were obtained at the same grinding time.

### Example 2

The cementitious waste material used was the same as in example 1.

A Portland clinker for CEM I 52.5 R (according to standard EN 197-1) was used.

A laboratory ball mill with steel balls was used. For the grinding, 10 kg of a mixture with the respective proportions of Portland clinker, gypsum, and RCD-1 as indicated in below table 3 were introduced into the ball mill together with steel balls (diameter 45 - 49 mm). Vessel and balls were pre-heated to 100°C. The respective amount of grinding aid (a 2:1 mixture by weight of TIPA and DEIPA in all cases) in ppm relative to the total weight of Portland clinker, gypsum, and RCD-1 as indicated in below table 3 was added to the mill. Milling was then done for 2 hours.

The resulting blended cement was then mixed with water to yield a water to cement ratio of 0.5. Shrinkage of the resulting mix was tested according to standard EN 12617-4 after the time indicated in below table 3. Compressive strength was measured according to standard EN 12190 on 4×4×16cm prisms after the time indicated in below table 3.

**Table 3: Examples 3-1 to 3-7 (examples 3-1, 3-2, 3-4 are not inventive)**

| **Example** | **3-1** | **3-2** | **3-3** | **3-4** | **3-5** | **3-6** | **3-7** |
|---|---|---|---|---|---|---|---|
| Portland clinker [%] | 95 | 80 | 80 | 70 | 70 | 70 | 70 |
| Gypsum [%] | 5 | 5 | 5 | 5 | 5 | 5 | 5 |
| RCD-1 [%] | 0 | 15 | 15 | 25 | 25 | 25 | 25 |
| Grinding aid [ppm] | none | none | 800 | none | 400 | 600 | 800 |
| Shrinkage @ 10 h [µm/m]* | - 80 | -210 | -155 | n.m. | n.m. | n.m. | n.m. |
| Compressive strength @ 2 days [MPa] | 36 | 31 | 37 | 27 | 29 | 29 | 31 |
| Compressive strength @ 7 days [MPa] | 48 | 42 | 47 | 37 | 39 | 40 | 41 |
| Compressive strength @ 28 days [MPa] | 55 | 50 | 53 | 42 | 44 | 46 | 48 |

| | | | | | | | |
|---|---|---|---|---|---|---|---|
| * negative values indicate shrinkage, positive values indicate expansion n.m.: not measured | | | | | | | |

It can be seen from the above results that the addition of RCD-1 leads to an increase in shrinkage as compared to a cement where only Portland clinker is present (cf examples 3-1, 3-2, 3-4). The addition of a grinding aid of the present invention leads to a significant decrease in shrinkage (cf examples 3-3 vs 3-2 and 3-5 vs 3-4).

The replacement of Portland clinker by RCD-1 powder also leads to a decrease in compressive strength (cf examples 3-1, 3-2, 3-4). The addition of a grinding aid of the present invention leads to a significant increase in compressive strength (cf examples 3-3 vs 3-2 and 3-5 to 3-7 vs 3-4)

## Claims

1. A method of manufacturing a blended cement, said method comprising the steps of
(1) providing a Portland clinker,
(2) providing cementitious waste material,
(3) providing a grinding aid selected from alkanolamines, glycols, glycerol, carbohydrates, chlorides, or mixtures thereof, and
(4) co-grinding the Portland clinker and cementitious waste material in the presence of said grinding aid.

2. The method according to claim 1, **characterized in that** a weight ratio of Portland clinker to cementitious waste material is between 1:1 and 10:1, preferably between 2:1 and 6:1, especially around 3:1 or 5:1.

3. The method according to at least one of claims 1 - 2, **characterized in that** additionally gypsum, a pozzolane, and/or a latent hydraulic material is present during grinding, wherein the pozzolane and/or the latent hydraulic material is different from the cementitious waste material.

4. The method according to at least one of claims 1 - 3, **characterized in that** the grinding aid is present in an amount of 40 - 2500 ppm, preferably 100 - 1500 ppm, especially 800 - 1200 ppm, relative to the total dry weight of the combined Portland clinker, cementitious waste material, and, if present, gypsum, pozzolane, and latent hydraulic material.

5. The method according to at least one of claims 1 - 4, **characterized in that** grinding aid is selected from triethanolamine, triisopropanolamine, diethanolisopropanolamine, N-methyldiethanolamine, ethylene glycol, diethylene glycol, propylene glycol, dipropylene glycol, butyl diglycol, neopentyl glycol, hexylene glycol, glycerol, a carbohydrate, sodium chloride, calcium chloride, or mixtures thereof.

6. The method according to at least one of claims 1 - 5, **characterized in that** it additionally comprises a step of size separation of particles.

7. A blended cement obtainable in a method as claimed in at least one of claims 1 - 6.

8. A blended cement according to claim 7, **characterized in that** it comprises (relative to the total dry weight of the blended cement unless stated otherwise)
a) 60 - 90 w%, preferably 70 - 80 w%, of Portland clinker,
b) 5 - 35 w%, preferably 15 - 25 w% of cementitious waste material,
c) optionally 1 - 10 w%, preferably 5 w%, of gypsum, and
d) 40 - 2500 ppm, preferably 100 - 1500 ppm, especially 800 - 1200 ppm, relative to the total dry weight of the combined Portland clinker, cementitious waste material, and gypsum if present, of a grinding aid selected from alkanolamines, glycols, glycerol, carbohydrates, chlorides, or mixtures thereof.

9. A construction material, especially a concrete or mortar, comprising the blended cement according to at least one of claims 7 or 8.

10. The use of an admixture selected from alkanolamines, glycols, and/or glycerol to reduce the shrinkage of a blended cement, or of a construction material comprising a blended cement, during hardening, said blended cement comprising Portland cement and a supplementary cementitious material retrieved from cementitious waste material.

11. The use of an admixture selected from alkanolamines, glycols, and/or glycerol to increase the compressive strength of a blended cement, or of a construction material comprising a blended cement, after hardening, said blended cement comprising Portland cement and a supplementary cementitious material retrieved from cementitious waste material.

12. The use according to claim 10 or claim 11, **characterized in that** the admixture is added to Portland clinker and/or the supplementary cementitious material before or during the grinding thereof.

13. The use of a grinding aid selected from alkanolamines, glycols, glycerol, carbohydrates, chlorides, or mixtures thereof to improve the efficiency of the grinding of cementitious waste material, wherein the grinding is done without carbonation of the cementitious waste material.

14. The use according to at least one of claims 10 - 13, **characterized in that** the admixture or grinding aid is selected from triethanolamine, triisopropanolamine, diethanolisopropanolamine, N-methyldiethanolamine, ethylene glycol, diethylene glycol, propylene glycol, dipropylene glycol, butyl diglycol, neopentyl glycol, hexylene glycol, glycerol, a carbohydrate, sodium chloride, calcium chloride, or mixtures thereof.

15. The use according to at least one of claims 13 or 14, **characterized in that** the grinding aid is used in an amount of 100 - 1500 ppm, preferably 250 - 1200 ppm, especially 400 ppm or 1000 ppm, relative to the dry weight of the cementitious waste material.
